(19) **Europäisches Patentamt / European Patent Office / Office européen des brevets**

(11) **EP 2 586 082 B1**

(12) **EUROPEAN PATENT SPECIFICATION**

(45) Date of publication and mention of the grant of the patent:
**07.09.2016 Bulletin 2016/36**

(51) Int Cl.:
*H01M 10/12* (2006.01)  *H01M 2/16* (2006.01)
*H01M 2/18* (2006.01)

(21) Application number: **11798929.3**

(22) Date of filing: **23.06.2011**

(86) International application number:
**PCT/US2011/041651**

(87) International publication number:
**WO 2011/163489 (29.12.2011 Gazette 2011/52)**

(54) **SEPARATOR FOR LEAD ACID BATTERY**

SEPARATOR FÜR EINE BLEISÄUREBATTERIE

SÉPARATEUR POUR BATTERIE PLOMB ACIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2010 US 823976**

(43) Date of publication of application:
**01.05.2013 Bulletin 2013/18**

(73) Proprietor: **Trojan Battery Company Santa Fe Springs, CA 90670 (US)**

(72) Inventors:
• **HO, Marvin, C.**
**Santa Fe Springs**
**CA 90670 (US)**

• **BECKLEY, Gordon, C.**
**Santa Fe Springs**
**CA 90670 (US)**

(74) Representative: **Dolleymores**
**9 Rickmansworth Road**
**Watford, Hertfordshire WD18 0JU (GB)**

(56) References cited:
| | |
|---|---|
| EP-A1- 0 507 090 | EP-A2- 1 482 579 |
| US-A- 2 247 091 | US-A- 4 213 815 |
| US-A- 4 288 503 | US-A- 4 317 872 |
| US-A- 5 154 988 | US-A- 5 154 988 |
| US-A1- 2008 299 462 | US-A1- 2009 253 041 |
| US-B1- 6 242 127 | US-B1- 6 458 491 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a separator for a lead-acid electrochemical battery, especially a flooded or wet cell lead-acid electrochemical battery.

BACKGROUND OF THE INVENTION

A typical lead-acid battery eg a flooded lead-acid battery, includes positive and negative plates separated by porous separators and immersed in an electrolyte. Positive and negative active materials are manufactured as pastes that are coated on the positive and negative electrode grids, respectively, forming positive and negative plates. The electrode grids, while primarily constructed of lead, are often alloyed with antimony, calcium, or tin to improve their mechanical characteristics. Antimony is generally a preferred alloying material for deep discharge batteries. The positive and negative active material pastes generally comprise lead oxide (PbO or lead (II) oxide). The electrolyte typically includes an aqueous acid solution, most commonly sulfuric acid ($H_2SO_4$). Once the battery is assembled, the battery undergoes a formation step in which a charge is applied to the battery in order to convert the lead oxide of the positive plates to lead dioxide ($PbO_2$ or lead (IV) oxide) and the lead oxide of the negative plates to lead (Pb).

After the formation step, a battery may be repeatedly discharged and charged in operation. During battery discharge, the positive and negative active materials react with the sulfuric acid of the electrolyte to form lead (II) sulfate ($PbSO_4$). By the reaction of the sulfuric acid with the positive and negative active materials, a portion of the sulfuric acid of the electrolyte is consumed. However, under normal conditions, sulfuric acid returns to the electrolyte upon battery charging. The reaction of the positive and negative active materials with the sulfuric acid of the electrolyte during discharge may be represented by the following formulae.

Reaction at the negative electrode:

$$Pb(s) + SO_4^{2-}(aq) \leftrightarrow PbSO_4(s) + 2e^-$$

Reaction at the positive electrode:

$$PbO_2(s) + SO_4^{2-}(aq) + 4H^+ + 2e^- \leftrightarrow PbSO_4(s) + 2H_2O(l)$$

As shown by these formulae, during discharge, electrical energy is generated, making the flooded lead-acid battery a suitable power source for many applications. For example, flooded lead-acid batteries may be used as power sources for electric vehicles such as forklifts, golf cars, electric cars, and hybrid cars. Flooded lead-acid batteries are also used for emergency or standby power supplies, or to store power generated by photovoltaic systems.

During operation of a flooded lead-acid battery using an electrode grid alloyed with antimony, antimony may leach or migrate out of the electrode grid. Once the antimony deposits on the surface of negative electrode, it will change potential of negative electrode and cause battery to be overcharged easily during application. This will undesirably shorten battery life. Rubber is known to be an effective barrier for preventing or delaying the antimony from leaching from the positive electrode to the negative electrode. Accordingly, some separators for flooded lead acid batteries include a glass mat (i.e., a glass fiber mat) against the positive electrode and a porous rubber sheet between the glass mat and the negative electrode. However, when immersed in the acidic electrolyte of a flooded lead-acid battery, a rubber separator sheet may oxidize and crack. When a rubber separator cracks, lead dendrites may grow from the negative to the positive electrode, thus causing the battery to short circuit. Accordingly, some have proposed using thicker rubber sheets for lead-acid batteries. However, this increases the cost of the separators, increases the internal resistance, and additionally, does not prevent the rubber separator sheet from oxidizing and splitting.

Due to the expense of rubber, some manufacturers have abandoned the use of rubber altogether, instead, preferring to use a polymer separator for flooded lead-acid batteries. A polymer separator is much sturdier than a rubber separator, and thus does not tend to split when used in a flooded-lead acid battery. Such a separator may prevent the short circuits caused by lead dendrite growth, but does not prevent antimony migration. Thus, batteries using only a polymer separator have shortened battery life.

Alternatively, some have attempted to make and use a mixed rubber and polymer separator. Such separators generally include a porous polymer matrix filled with rubber. It was believed that these mixed separators would have improved strength and prevent antimony from transferring to negative electrode. While such separators are more sturdy than rubber alone, and additionally may prevent some antimony leaching, they allow more antimony transfer than a rubber separator alone. Accordingly, due to antimony leaching, flooded lead-acid batteries using a mixed rubber polymer separator have a reduced battery life.

US 4213815A and US4288503A disclose two-layer separators comprising a rubber layer and a polyester layer, the separator being shaped as an envelope. US 2247091A discloses a two-layer separator, shaped as an envelope and having a first and second rubber layer.

SUMMARY

The present invention provides a separator for a lead acid battery as claimed in claim 1. It further provides a lead-acid battery as claimed in claim 8. Further optional features are disclosed in the remaining claims.

BRIEF DESCRIPTION OF THE DRAWINGS

The accompanying drawings, together with the specification, illustrate various aspects and embodiments of the invention, and background art:

FIG. 1 is a schematic sectional view of a flooded deep discharge lead-acid battery according to one embodiment of the present invention;
FIG. 2 is a schematic view of a separator and FIG. 2A is an enlarged view of FIG. 2;
FIG. 3 is a schematic view of a separator according to one embodiment of the present invention and FIG. 3A is an enlarged view of FIG. 3;
FIG. 4 is a schematic view of a separator and FIG. 4A is an enlarged view of FIG. 4; and
FIG. 5 is a schematic view of a separator and FIG. 5A is an enlarged view of FIG. 5.

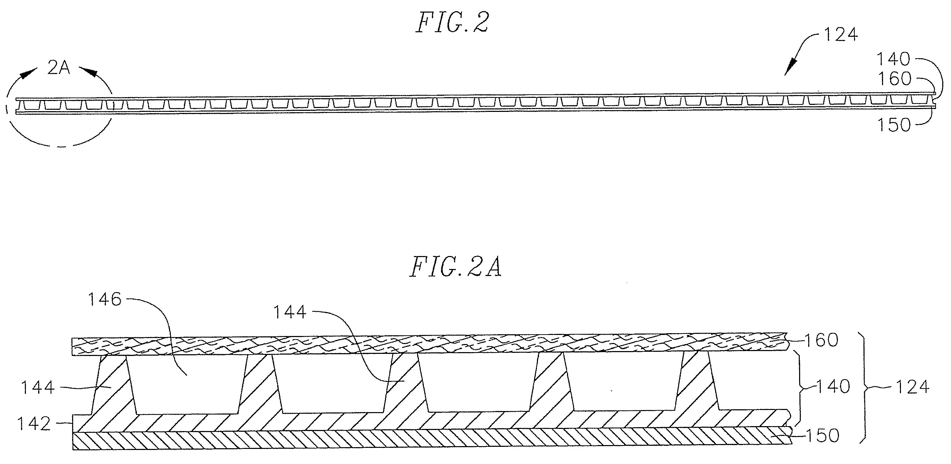

Do note that FIGS. 2, 2A, 4, 4A, 5, 5A all relate to comparative examples not part of the claimed invention as defined in the claims.

DETAILED DESCRIPTION

According to one embodiment of the invention, a separator for a flooded lead-acid battery includes a first layer and a second layer. The first layer is made of a rubber material. The second layer is made of a polymer material. The rubber layer may prevent or reduce antimony transfer, while the polymer layer may prevent short circuits caused by lead dendrite growth.

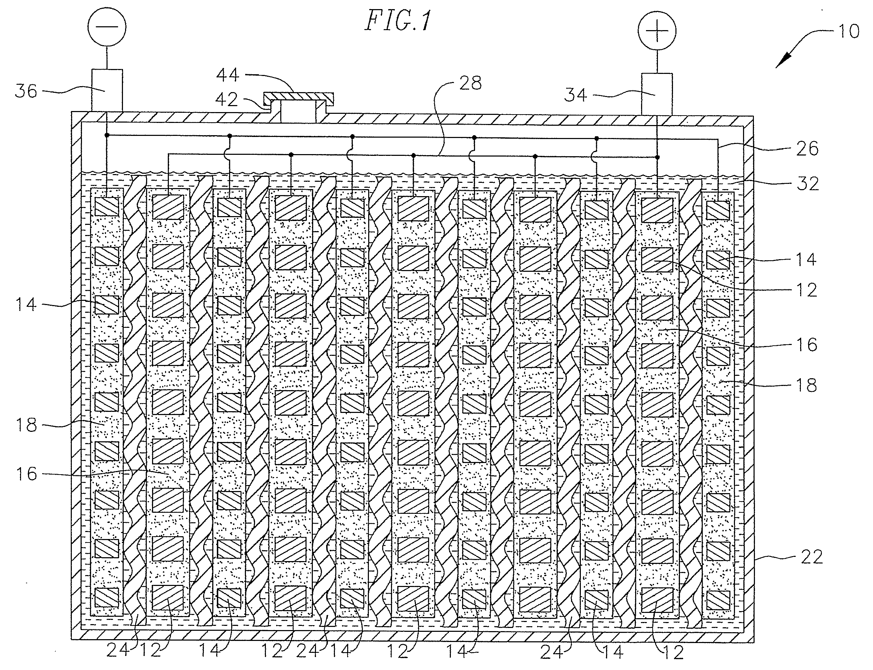

In one embodiment, as shown schematically in FIG. 1, a single cell flooded deep discharge lead-acid battery 10 includes a plurality of positive electrode grids 12 and a plurality of negative electrode grids 14. Each positive electrode grid is coated with a positive active material paste 16 to form a positive plate. Each negative electrode grid 14 is coated with a negative active material paste 18 to form a negative plate. The coated positive and negative electrode grids are arranged in an alternating stack within a battery case 22 using a plurality of separators 24 to separate each electrode grid from adjacent electrode grids and prevent short circuits. A positive current collector 28 connects the positive electrode grids and a negative current collector 26 connects the negative electrode grids. An electrolyte solution 32 fills the battery case. Positive and negative battery terminal posts 34, 36 extend from the battery case to provide external electrical contact points used for charging and discharging the battery. The battery case includes a vent 42 to allow excess gas produced during the charge cycle to be vented to atmosphere. A vent cap 44 prevents electrolyte from spilling from the battery case. While a single cell battery is illustrated, it should be clear to one of ordinary skill in the art that the invention can be applied to multiple cell batteries as well.

Suitable polymers for the polymer layer include polyethylene, polyvinyl chloride, polypropylene, copolymers of ethylene and propylene, phenol formaldehyde (PF) resin, polyester, copolymers of styrene and butadiene, copolymers of a nitrile and butadiene, and cellulose based polymers. The polymer layer should be sufficiently porous to allow the electrolyte to be able to transfer through the layer to the negative electrode. In an exemplary embodiment, polyethylene is used for the polymer layer. Suitable rubbers for the rubber layer include natural rubber, synthetic rubber (isoprene), and ethylene propylene diene monomer (EPDM) rubber. As is known in the art, the rubber layer may be partially cross-linked by an electron beam unit. Using this or a similar treatment, a porous rubber layer may be formed. The rubber layer should be sufficiently porous to allow the electrolyte to be able to transfer through the layer to the negative electrode. In an exemplary embodiment, the rubber layer includes natural rubber.

As shown in FIGs. 2 and 2A, a separator 124 has a rubber layer 140 and a polymer layer 150. The rubber layer 140 includes a backweb 142 and ribs 144. The ribs 144 form channels 146 that allow electrolyte to flow and gas to escape during charging of the battery. A reinforcing layer 160 is included. The reinforcing layer may be a material such as glass mat (i.e., glass fiber mat) or polyester fibers. The reinforcing layer 160 reinforces an adjacent electrode and prevents the active material of the adjacent electrode from expanding into the channels 146. In a flooded lead-acid battery, the ribs 144 generally face the positive electrode. The inclusion of the rubber layer 140 substantially prevents antimony transfer from the positive electrode grid to the negative electrode, and thus substantially prevents or reduces antimony poisoning. This is true even if the rubber layer 140 cracks or splits due to degradation. The polymer layer 150 is resistant to oxidation, and thus generally does not crack and split in an acidic solution. Therefore, the polymer layer 150 may physically prevent lead dendrite growth from the negative electrode to the positive electrode, thus preventing short circuits even when the rubber layer 140 cracks or splits.

Most rubber layer backwebs have a thickness of 0.33 to 0.43 cm (0.013 to 0.017 inches). While a rubber layer 140 having a thinner backweb 142 may be more prone to cracking and splitting in the acidic electrolyte, a cracked or split rubber layer 140 still substantially prevents or reduces antimony transfer. Accordingly, as a polymer layer 150 physically prevents lead transfer in separators of the present invention, a thinner rubber layer 140 backweb 142 may be used. For instance, a rubber layer 140 having a backweb 142 of 0.2 to 0.3 cm (0.008 to 0.012 inches) may be used. The polymer layer 150 may have a thickness of less than 0.25 cm (0.010 inches). However, any suitable thicknesses may be used.

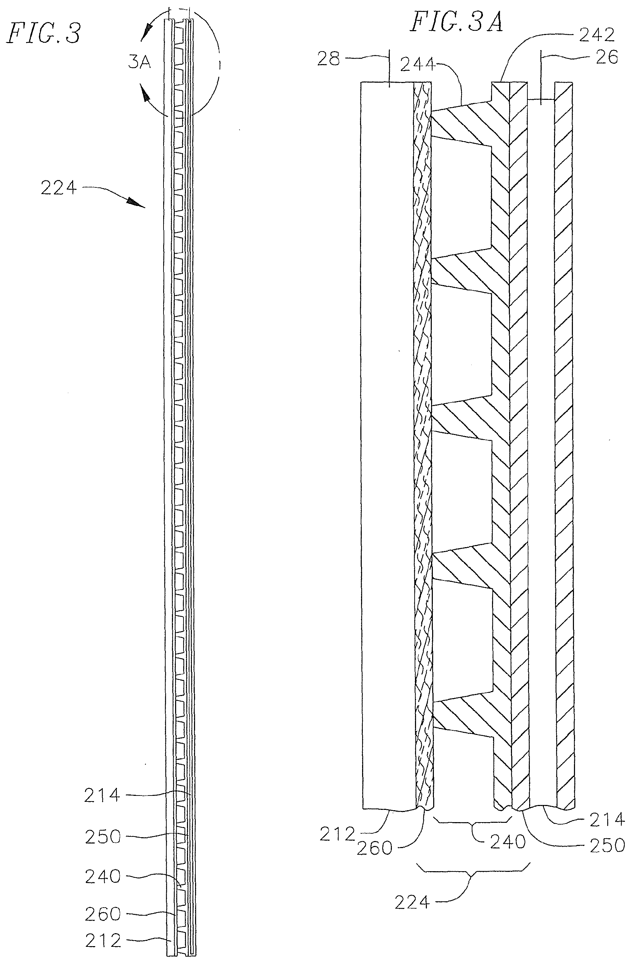

FIGs. 3 and 3A depict a separator 224 with a positive electrode 212 and negative electrode 214. A glass mat 260 is adjacent to the positive electrode 212. A rubber layer 240 is adjacent to the glass mat 260 and includes a backweb 242 and ribs 244. A polymer layer 250 is adjacent to the rubber layer 240 and is wrapped around the negative electrode 214. In other words, the polymer layer 250 in FIGs. 3 and 3A is a pocket enveloping the negative electrode 214. As shown in FIGs. 3 and 3A, the polymer layer 250 envelope may be open at the top. In some embodiments, the polymer envelope may be formed by wrapping a polymer sheet around the bottom of the negative electrode 214 and sealing the polymer sheet on the sides of the negative electrode 214. By surrounding the negative electrode 214 with the polymer layer 250, any lead or lead containing materials in or adjacent to the negative electrodes that could cause short circuits will be separated from the remainder of the battery by the envelope. Even if cracks or splits develop in the rubber layer 260 due to oxidation, the polymer layer envelope 250 will also prevent lead dendrite travel from the negative electrode 214 to the positive electrode 212 through the cracks or splits of the rubber layer 260, thus preventing this type of battery short circuit.

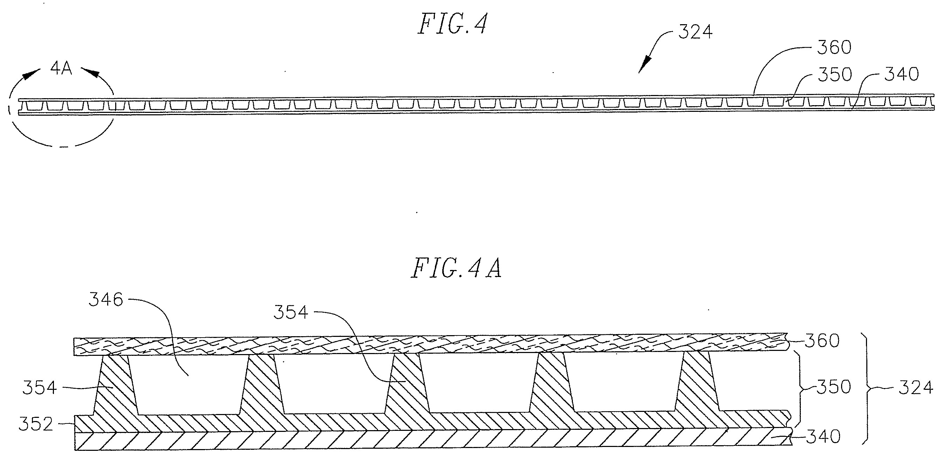

FIGs. 4 and 4A depict an alternative structure for a separator. In FIGs. 4 and 4A, a separator 324 includes a polymer layer 350 having a backweb 352 and ribs 354. The separator 324 also includes a flat rubber layer 340 on one side of the polymer layer 350 and a glass mat 360 on the other side of the polymer layer 350. In other words, in this design, the rubber layer 340 and the polymer layer 350 are reversed so that the rubber layer 340 is adjacent to the negative electrode and the polymer layer 350 is sandwiched between the rubber layer 340 and the glass mat 360. The polymer layer 350 may have a backweb 352 thickness of 0.18 to 0.33 cm (0.007 to 0.013 inches). The flat rubber layer 340 may have a thickness of less than 0.33 cm (0.013 inches). However, any suitable thicknesses may be used.

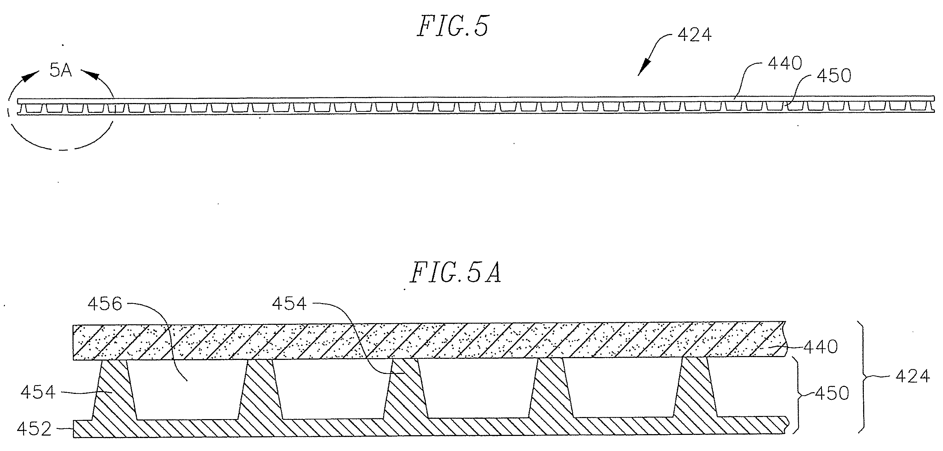

FIGs. 5 and 5A depict an additional alternative structure for a separator. In FIGs. 5 and 5A, a separator 424 includes a foamed rubber layer 440 and a polymer layer 450. The polymer layer 450 includes a backweb 452 and ribs 454. The ribs 454 form channels 456. The foamed rubber layer 440 of FIGs. 5 and 5A functions as both a rubber layer and a replacement for a glass mat. In other words, the foamed rubber layer 440 is effective at preventing or reducing antimony transfer, serves to reinforce an adjacent electrode, and also prevents active material of an adjacent electrode from expanding into the channels 456.

The present invention will now be described with reference to the following examples. These examples are provided for illustrative purposes only, and are not intended to limit the scope of the present invention.

Example 1

Positive and negative electrodes for lead-acid batteries were formed according to customary practices. Separators according to an embodiment of the present invention were formed and placed between each positive and negative plates in a cell. The separators used in Example 1 included a rubber sheet having a backweb and ribs, a flat porous polyethylene sheet, and a glass mat. The separators were assembled with the rubber sheet in the middle, the ribs facing the positive electrode.

Comparative Example 1

Cells were formed as in Example 1 except that a traditional lead-acid separator was used. The traditional lead-acid separators used in Comparative Example 1 included a rubber sheet having a backweb and ribs and a glass mat. The separators were assembled with the glass mat adjacent to the positive electrode and the flat side of the rubber sheet backweb adjacent to the negative electrode.

For the tests, the cells were repeatedly discharged and charged using standard procedures as established by Battery Council International. The corrected capacity and end of charge voltage of Example 1 and Comparative Example 1 were measured after each cycle. As expected, there were no substantial changes to the capacity or end of charge voltage in Example 1. In other words, battery performed was not negatively impacted by the inclusion of an additional layer. However, the use of an additional membrane in a battery, i.e., the use of both a rubber layer and a polymer layer, increases the resistance of a battery. While this may negatively affect a battery if used for high current applications, the increase in resistance generally does not affect the performance of the battery. It is expected that Example 1 will have a significantly higher cycle life than Comparative Example 1. In other words, as the rubber layer of Comparative Example 1 oxidizes and cracks, a short circuit will occur as lead migrates from the negative electrode to the positive electrode. However, in Example 1, even if the rubber layer oxidizes and cracks, the polymer layer should prevent lead migration, and thus should prevent a short circuit.

While the present invention has been illustrated and described with reference to certain exemplary embodiments, those of ordinary skill in the art would appreciate that various modifications and changes can be made to the described embodiments without departing from the scope of the present invention, as defined in the following claims.

**Claims**

1.  A separator for a lead-acid battery comprising:

    a first layer (240) made of a rubber material; and
    a second layer (250) made of a polymer material, **characterised in that** the second layer is an envelope adapted to contain an electrode by surrounding its side and bottom, the first layer being a backweb (242) having a first and a second side, the first side being flat and adjacent to the second layer, and the second side having a plurality of ridges (244) extending therefrom.

2.  The separator of claim 1, wherein the rubber material comprises natural rubber.

3.  The separator of claim 1, wherein the polymer material comprises polyethylene.

4.  The separator of claim 1, wherein the separator further comprises a reinforcing layer (160).

5.  The separator of claim 1, wherein the separator further comprises a reinforcing layer, the reinforcing layer being adjacent to the plurality of ridges and the second layer is adjacent to the first side.

6.  The separator of claim 1, wherein the backweb has a thickness of about 0.20 to about 0.30 mm (0.008 to 0.012 inches).

7.  The separator of claim 1, wherein the first layer comprises foamed rubber.

8.  A lead-acid battery comprising:

    a negative electrode (14);
    a positive electrode (12); and
    an electrolyte (32);
    **characterised by** the separator of Claim 1 between the negative electrode and the positive electrode.

9.  The battery of claim 8, wherein the plurality of ridges face the positive electrode.

10. The battery of claim 9, further comprising a reinforcing layer (160), the reinforcing layer being between the plurality of ridges and the positive electrode.

11. A lead-acid battery: as claimed in claim 10,
    wherein the first layer comprises natural rubber and the second layer comprises polyethylene.

12. The battery of claim 8, where the second layer surrounds the negative electrode.

**Patentansprüche**

1. Separator für eine Bleisäurebatterie, umfassend:

   eine erste Schicht (240), aus einem Gummimaterial hergestellt ist; und
   eine zweite Schicht (250), die aus einem Polymermaterial hergestellt ist, **dadurch gekennzeichnet, dass** die zweite Schicht eine Hülle ist, die angepasst ist, eine Elektrode durch Umgeben ihrer Seite und und ihres Bodens zu enthalten, wobei die erste Schicht ein Backweb (242) mit einer ersten und zweiten Seite ist, wobei die erste Seite flach ist und die zweite Schicht angrenzt, und wobei die zweite Seite eine Vielzahl von Rippen (244) aufweist, die sich daraus erstrecken.

2. Separator nach Anspruch 1, wobei das Gummimaterial Naturgummi umfasst.

3. Separator nach Anspruch 1, wobei das Polymermaterial Polyethylen umfasst.

4. Separator nach Anspruch 1, wobei der Separator ferner eine Verstärkungsschicht (160) umfasst.

5. Separator nach Anspruch 1, wobei der Separator ferner eine Verstärkungsschicht umfasst, wobei die Verstärkungsschicht an die Vielzahl von Rippen angrenzt und die zweite Schicht an die erste Seite angrenzt.

6. Separator nach Anspruch 1, wobei das Backweb eine Dicke von ca. 0,20 bis ca. 0,30 mm (0.008 bis 0.012 Zoll) aufweist.

7. Separator nach Anspruch 1, wobei die erste Schicht Schaumgummi umfasst.

8. Bleisäurebatterie, umfassend:

   eine negative Elektrode (14);
   eine positive Elektrode (12); und
   einen Elektrolyt (32);
   **gekennzeichnet durch** den Separator von Anspruch 1 zwischen der negativen Elektrode und der positiven Elektrode.

9. Batterie nach Anspruch 8, wobei die Vielzahl von Rippen der positiven Elektrode zugewandt ist.

10. Batterie nach Anspruch 9, die ferner eine Verstärkungsschicht (160) umfasst, wobei sich die Verstärkungsschicht zwischen der Vielzahl von Rippen und der Elektrode befindet.

11. Bleisäurebatterie: wie in Anspruch 10 beansprucht, wobei die erste Schicht Naturgummi umfasst und die zweite Schicht Polyethylen umfasst.

12. Batterie nach Anspruch 8, wobei die zweite Schicht die negative Elektrode umgibt.

**Revendications**

1. Séparateur pour une batterie au plomb comportant:

   une première couche (240) en caoutchouc naturel; et
   une deuxième couche (250) en polymère, **caractérisée en ce que** la deuxième couche est une enveloppe adaptée de manière à contenir une électrode en l'entourant sur le côté et sur le bas, la première couche étant une âme arrière (242) qui comporte un premier et un deuxième côtés, le premier côté étant plat et adjacent à la deuxième couche, et le deuxième côté comportant une pluralité de crêtes (244) qui s'étendent• à partir de ce côté.

2. Séparateur selon la revendication 1, **caractérisé en ce que** le matériau en caoutchouc comprend du caoutchouc naturel.

**3.** Séparateur selon la revendication 1, **caractérisé en ce que** le matériau en polymère comprend du polyéthylène.

**4.** Séparateur selon la revendication 1, **caractérisé en ce que** le séparateur comprend par ailleurs une couche de renforcement (160).

**5.** Séparateur selon la revendication 1, **caractérisé en ce que** le séparateur comprend par ailleurs une couche de renforcement, cette couche de renforcement étant adjacente à la pluralité d'arêtes et la deuxième couche étant adjacente au premier côté.

**6.** Séparateur selon la revendication 1, **caractérisé en ce que** l'âme arrière est d'une épaisseur comprise entre 0,20 mm environ et 0,30 mm environ.

**7.** Séparateur selon la revendication 1, **caractérisé en ce que** la première couche comprend du caoutchouc mousse.

**8.** Batterie au plomb comportant:

   une électrode négative (14);
   une électrode positive (12); et
   un électrolyte (32);
   **caractérisée par** le séparateur selon la revendication 1 disposé entre l'électrode négative et l'électrode positive.

**9.** Batterie selon la revendication 8, **caractérisée en ce que** la pluralité d'arêtes est tournée vers l'électrode positive.

**10.** Batterie selon la revendication 9, comportant par ailleurs une couche de renforcement (160). cette couche de renforcement étant disposées entre la pluralité de crêtes et l'électrode positive.

**11.** Batterie au plomb selon la revendication 10,
**caractérisée en ce que** la première couche comprend du caoutchouc naturel et la deuxième couche comprend du polyéthylène.

**12.** Batterie selon la revendication 8, **caractérisée en ce que** la deuxième couche entoure l'électrode négative.

FIG.1

FIG.2

FIG.2A

*FIG.3*

*FIG.3A*

EP 2 586 082 B1

## FIG.4

4A

324

360

350

340

## FIG.4A

346

354

354

352

360

350

324

340

FIG.5

FIG.5A

EP 2 586 082 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4213815 A
- US 4288503 A
- US 2247091 A